# EUROPEAN PATENT APPLICATION

(11) **EP 2 629 389 A1**
(43) Date of publication of application: **21.08.2013**
(21) Application number: 11832440.9
(22) Date of filing: 04.10.2011
(51) Int. Cl.: H02J 7/00, H01M 10/44, H02J 7/02

(54) **POWER SUPPLY SYSTEM**

(30) Priority: 15.10.2010 JP 2010232861
(71) Applicant: Sanyo Electric Co., Ltd., Osaka 570-8677 (JP)
(72) Inventor: IWASAKI Toshiya, Moriguchi-shi Osaka 570-8677 (JP); OKUDA Yasuo, Moriguchi-shi Osaka 570-8677 (JP); SAKAI Souichi, Moriguchi-shi Osaka 570-8677 (JP)
(74) Representative: Metzler, Volker
(86) International application number: PCT/JP2011/072820
(87) International publication number: WO 2012/050004

(57) **Abstract**

A power supply system (100) provided with a plurality of battery units (40), a power converter (28) connected to parallel connection lines (L1) and including a bidirectional DC/AC converter circuit or a bidirectional voltage converter circuit, and a master controller (22) for controlling the power converter (28), wherein the master controller (22): receives a switch state signal expressing that selection switches (SW1) are actually closed; causes the power converter (28) to operate after at least a prescribed standard number of the selection switches (SW1) are closed; calculates target charge/discharge power according to the number of storage battery control units (42) connected to the power converter (28) on the basis of the switch state signal; and controls the power converter (28) in such a manner that the target charge/discharge power is reached.

## Description

### CROSS-REFERENCE TO RELATED APPLICATION

The present application is a continuation application of International Application No. PCT/JP2011/072820, filed October 4, 2011, the entire contents of which are incorporated herein by reference and priority to which is hereby claimed. The PCT/JP2011/072820 application claimed the benefit of the date of the earlier filed Japanese Patent Application No. 2010-232861 filed October 15, 2010, the entire content of which is incorporated herein by reference, and priority to which is hereby claimed.

### TECHNICAL FIELD

The present invention generally relates to a power supply system including a storage battery.

### BACKGROUND ART

In order to effectively use electrical power, a power supply system composed of a combination of a commercial power supply and a storage battery has been put in use. Specifically, depending on temporal variations in a load, the load is supplied with discharge power from the storage battery in addition to the power supplied to the load from the commercial power supply when the load is high and the storage battery is charged from the commercial power supply when the load is low, so as to temporally even out the power supplied from the commercial power supply. A solar power generation system and a fuel cell system, which have been developed in recent years, are also combined with the power supply system.

The power supply system includes a power converter. The power converter includes, for instance, at least one of a bidirectional DC/AC conversion circuit for performing DC/AC power conversion between a storage battery, which is a DC power supply, and an AC power supply or an AC load, and a bidirectional voltage conversion circuit for performing bidirectional DC/DC voltage conversion between the storage battery and a DC power supply or a DC load. A switch is provided between the power converter and the storage battery, and controls connection between the power converter and the storage battery.

### SUMMARY OF INVENTION

### TECHNICAL PROBLEM

In such a power supply system, when a plurality of storage batteries are connected in parallel so as to be charged and discharged, and when the output voltages of the respective storage batteries are different from each other, power is exchanged between the storage batteries. At this time, when the difference between the output voltages of the respective storage batteries is large, large charging and discharging currents flow between the storage batteries having the large output voltage difference. This may result in problems such as degradation in the life of the storage battery.

Activation of a power converter in a state where a storage battery is not connected may result in problems such as occurrence of overload on the power converter, a switch circuit for charging and discharging and the like. Furthermore, in the case where the level of the storage battery actually connected to the power converter varies with time, the charge and discharge amount of the storage battery via the power converter is required to be adjusted depending on the variation.

### SOLUTION TO PROBLEM

The present invention provides a power supply system which includes: a battery unit including a plurality of storage battery control units which each include at least one storage battery cell and are connected to a parallel connection line via selection switches; a power converter which includes a DC/AC conversion circuit or a voltage conversion circuit between a power source or a load and the battery unit, and is connected to the parallel connection line; and a master controller controlling the power converter, wherein the master controller receives a switch state signal indicating that the selection switch is actually closed, causes the power converter to operate after at least a prescribed standard number of selection switches are closed, calculates a target charge/discharge power according to the number of storage battery control units connected to the power converter on the basis of the switch state signal, and controls the power converter such that the target charge/discharge power is reached.

### ADVANTAGEOUS EFFECTS OF INVENTION

The present invention can improve the reliability of the power supply system including the storage battery.

### BRIEF DESCRIPTION OF DRAWINGS

[FIG. 1] FIG. 1 is a view showing an overall configuration of a power supply system in an embodiment according to the present invention.
[FIG. 2] FIG. 2 is a view showing a configuration of the power supply system in the embodiment according to the present invention.
[FIG. 3] FIG. 3 is a view showing a configuration of a battery unit in the embodiment according to the present invention.
[FIG. 4] FIG. 4 is a view showing a configuration of the battery unit in the embodiment according to the present invention.
[FIG. 5] FIG. 5 is a flow chart showing processing at the time of starting a discharging operation in the embodiment according to the present invention.
[FIG. 6] FIG. 6 is a view illustrating processing at the time of starting the discharging operation in the embodiment according to the present invention.
[FIG. 7] FIG. 7 is a view illustrating processing at the time of starting the discharging operation in the embodiment according to the present invention.
[FIG. 8] FIG. 8 is a view illustrating processing at the time of starting the discharging operation in the embodiment according to the present invention.
[FIG. 9] FIG. 9 is a flow chart showing processing at the time of starting a charging operation in the embodiment according to the present invention.
[FIG. 10] FIG. 10 is a view illustrating processing at the time of starting the charging operation in the embodiment according to the present invention.
[FIG. 11] FIG. 11 is a view showing an overall configuration of a power supply system in another example of the embodiment according to the present invention.
[FIG. 12] FIG. 12 is a flow chart showing a standby process in the embodiment according to the present invention.
[FIG. 13] FIG. 13 is a view showing configurations of switches of the embodiment of the present invention.

### DESCRIPTION OF EMBODIMENTS

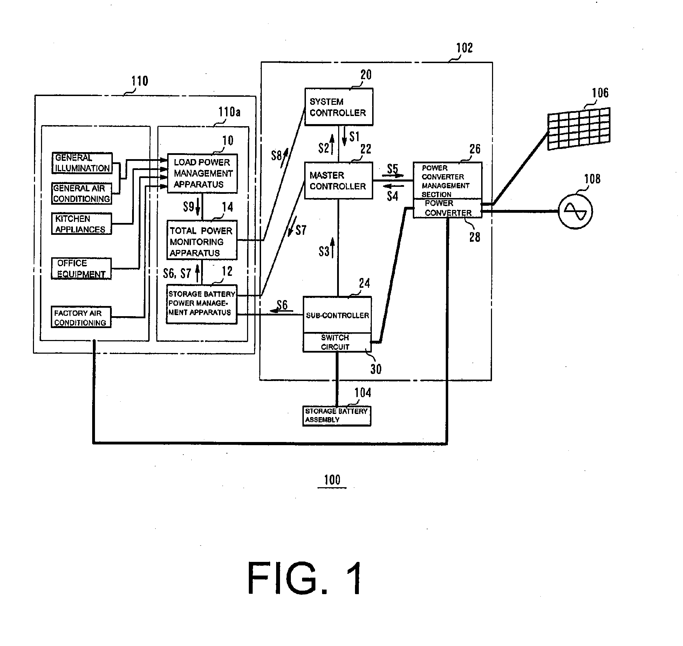

As shown in FIG. 1, a power supply system 100 in an embodiment according to the present invention is configured by including a power supply management system 102, a storage battery assembly 104, a solar battery system 106, and a system power supply 108. The power supply system 100 is used for supplying power to a load 110. Note that in FIG. 1, the thick solid lines represent the power flow, and thin solid lines represent the signal flow.

In the present embodiment, the solar battery system 106 and the system power supply 108 are used as power sources. The system power supply 108 is a single phase power supply, a three phase power supply, or the like, which is supplied from an external electric power company by combining power generated by various power generation systems, such as a hydroelectric power generation system, a nuclear power generation system, and a thermal power generation system. Further, for example, a large scale solar power generation system with an output power of one MW is used as the solar battery system 106. However, the system power supply 108 is not limited to these, and may include other power supplies, such as a fuel cell and a wind power generation system.

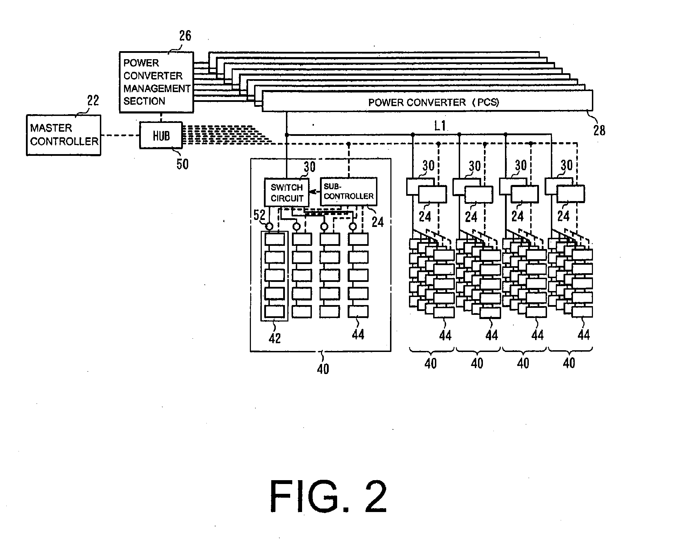

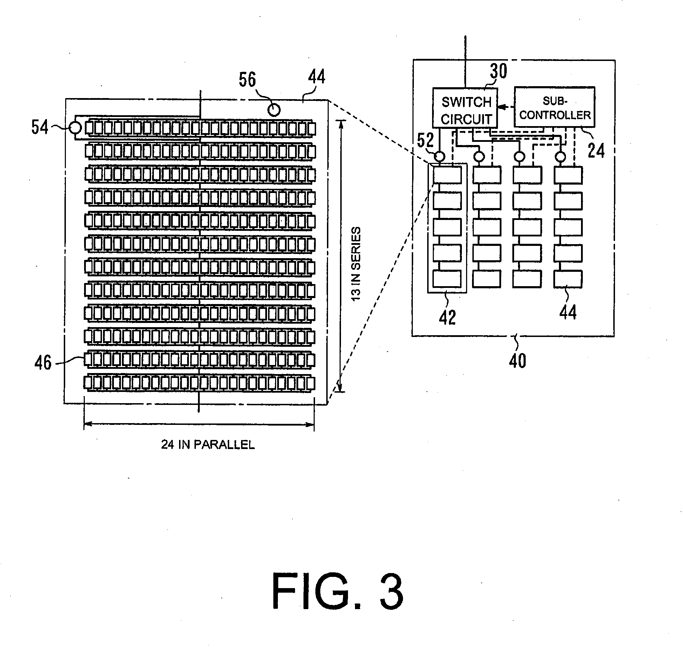

The storage battery assembly 104 is provided to supply power according to power required by the load 110. As shown in FIG. 2 and FIG. 3, the storage battery assembly 104 is hierarchically configured by storage battery packs 44 formed by combining a plurality of storage battery cells 46, storage battery control units 42 formed by combining a plurality of the storage battery packs 44, and battery units 40 formed by combining a plurality of the storage battery control units 42.

Specifically, the storage battery assembly 104 is configured as follows. As shown in FIG. 2, in the present embodiment, eight power converters 28 are provided, and the storage battery assembly 104 is divided into eight sub-assemblies. The power management is performed by assigning one of the power converters 28 to each of the sub-assemblies. Five of the battery units 40 are assigned to each of the power converters 28. That is, a total of 40 of the battery units 40 are provided, and each set of the five battery units 40 are connected to each of the power converters 28. Note that in FIG. 2, each of power lines is represented by a solid line, and each of signal lines is represented by a broken line. A master controller 22 and a power converter management section 26 are connected to each other via a HUB 50, and the master controller 22 and each of sub-controllers 24 are connected to each other via the HUB 50.

FIG. 3 is a view showing in detail a configuration of one battery unit 40 extracted from FIG. 2. One battery unit 40 is configured, as required, by connecting the storage battery control units (battery pack arrays) 42 in parallel, each of which is formed by connecting the storage battery packs 44 in series as required. In the example of FIG. 3, one storage battery control unit 42 is formed by connecting in series five storage battery packs 44, and one battery unit 40 is configured by connecting in parallel the four storage battery control units 42. In the present embodiment, one battery unit 40 is configured by twenty of the storage battery packs 44.

Further, the internal configuration of one storage battery pack 44 is shown enlarged in FIG. 3. In the present embodiment, one storage battery pack 44 is configured by connecting in series thirteen sets each configured by connecting in parallel twenty-four storage battery cells 46, each of which is a storage battery unit. That is, each of the storage battery packs 44 is configured by 24 x 13 = 312 of the storage battery cells 46.

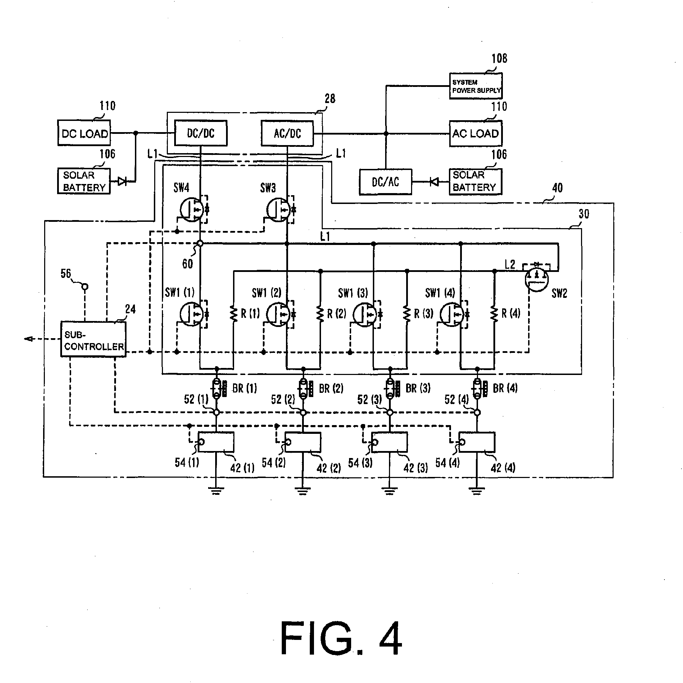

In each of the battery units 40, one sub-controller 24 and one switch circuit 30 are provided. As shown in FIG. 4, in the switch circuit 30, one selection switch SW1 is provided for each of the storage battery control units 42. Each of the storage battery control units 42 is connected to a parallel connection line L1 via the selection switch SW1. The selection switch SW1 is controlled to be opened and closed according to an opening/closing control signal from the sub-controller 24. That is, the storage battery control unit 42 is used as a minimum control unit at the time when the storage battery is connected to the parallel connection line L1.

Further, as shown in FIG. 4, the storage battery control units 42 (42(1) to 42(4)) included in one battery unit 40 are connected to a charging and discharging line L2 via resistors R (R(1) to R(4)), respectively. As a result, charging and discharging currents alternately flow between the storage battery control units 42 (42(1) to 42(4)) via the resistors R (R(1) to R(4)), so that the charged states of the storage battery control units 42 (42(1) to 42(4)) are made uniform. Preferably, each of the resistors R (R(1) to R(4)) has such a resistance value that a large current exerting an adverse effect, such as deterioration of the battery life, is prevented from flowing between the storage battery control units 42 (42(1) to 42(4)). For example, it is preferred that, when the storage battery cell 46 is configured by a lithium ion battery, and when the output voltage of the storage battery control unit 42 is in the range of about 200 to 250 (V), the resistance value of the resistor R is set to several to several hundreds of ohms (Q). Further, a switch SW2 may be provided to allow charging and discharging operations to be performed between the storage battery control units 42 (42(1) to 42(4)) via the parallel connection line L1 and the charging and discharging line L2. Note that it is preferred that the storage battery control units 42 (42(1) to 42(4)) be configured to be connected to the parallel connection line L1 and the charging and discharging line L2 via breakers BR (BR(1) to BR(4)), respectively. The breaker BR is provided to protect the storage battery control unit 42 by disconnecting the storage battery control unit 42 from the circuit at the time when the charging or discharging current to or from the storage battery control unit 42 exceeds a predetermined interruption reference current value.

Storage battery current sensors 52 are provided in the battery unit 40. The storage battery current sensor 52 is provided in each of the storage battery control units 42 and is provided in each of the storage battery packs. The current of each of the storage battery control units 42, and the current of each of the storage battery packs 44 are detected by the storage battery current sensors 52. Further, storage battery voltage sensors 54 are provided in the battery unit 40. The storage battery voltage sensor 54 is provided in each of the storage battery control units 42, and each of the storage battery packs 44. Further, the storage battery voltage sensor 54 is provided in each of the thirteen parallel assemblies, each of which is configured by connecting in parallel the storage battery cells 46 (parallel assembly of the twenty-four storage battery cells 46), and which are connected in series to form the storage battery pack 44. As result, the voltage of each of the storage battery control units 42, the voltage of each of the storage battery packs 44, and the voltage between the terminals of the parallel assembly of the storage battery cells 46 are detected. Note that in FIG. 3, only one of the storage battery current sensors 52 and only one of the storage battery voltage sensors 54 are illustrated in order to simplify the figure. Further, the temperature of the storage battery pack 44 is detected as a pack temperature by a temperature sensor 56. Note that a plurality of the temperature sensors 56 may be provided for each of the storage battery packs 44. The data of these sensors are acquired by the sub-controller 24. The sub-controller 24 outputs, to the master controller 22 and a storage battery power management apparatus 12, these data and the charging and discharging states (SOC: State Of Charge) calculated from these data as unit state data S3 and S6 which represent the state of each of the battery units 40. Further, when a fault exists in one of the battery units 40 constituting the storage battery assembly 104, the sub-controller 24 transmits the information for specifying the faulty battery unit 40, by incorporating the information into the unit state data S3 and S6.

Further, the sub-controller 24 receives a switch state signal representing the opened and closed states of the selection switches SW1, the switch SW2, the unit switches SW3 and SW4 which are included in the battery unit 40, and outputs the information of the switches to the master controller 22 by incorporating the information into the unit state data S3. It is preferred that the switch state signal enable the actual opened/closed state of each of the switches to be reliably determined. For example, it is preferred that when each of the switches is an FET, the switch state signal is obtained by directly detecting the gate voltage of the FET. The use of the switch state signal will be described below.

Note that the number of combinations of the storage battery cells 46, the number of combinations of the storage battery packs 44, the number of combinations of the storage battery control units 42, and the number of combinations of the battery units 40 may be suitably changed according to the specification of the power supply system 100. Further, a lithium ion battery can be used as the storage battery, but a secondary battery other than the lithium ion battery may also be applied. For example, a nickel-hydride battery, a nickelcadmium battery, and a manganese battery may be applied as the storage battery.

The power supply system 100 is provided in order to supply power to the load 110 including loads for general illumination and general air conditioning in factory facilities, kitchen appliances, display cases, air conditioners and the like.

A power management apparatus 110a is provided in the load 110. The power management apparatus 110a is configured by including a load power management apparatus 10, a storage battery power management apparatus 12, and a total power monitoring apparatus 14.

The load power management apparatus 10 acquires load side information data S9 representing the necessary power of the load 110. The load side information data S9 includes a total amount of power of the whole load 110 which is necessary to enable a system controller 20 described below to set a total charge and discharge control command S1. As shown in FIG. 1, when the load 110 is divided into four systems, the load power management apparatus 10 is internally regarded as an assembly of four load power management apparatuses respectively corresponding to the four systems.

The storage battery power management apparatus 12 receives the unit state data S6 representing the state of each of the battery units 40 included in the storage battery assembly 104, and power converter management data S7 representing the state of each of the power converters 28 included in the power supply system 100. The storage battery power management apparatus 12 transmits these kinds of information to the total power monitoring apparatus 14. The unit state data S6 includes the information used for generation of the total charge and discharge control command S1. As described above, the unit state data S6 includes the data of the voltage, temperature, current, SOC, and the like, of each of the storage batteries constituting the storage battery assembly 104. When a fault exists in one of the battery units 40 constituting the storage battery assembly 104, the unit state data S6 also includes the information representing the fault. Further, the power converter management data S7 includes information related to the setting of the total charge and discharge control command S1 and related to a fault in the power converter 28. For example, when a fault, such as a failure, is caused in one of the power converters 28 included in the storage battery assembly 104, the power converter management data S7 includes information for specifying the power converter 28 in which the fault exists.

The total power monitoring apparatus 14 receives the load side information data S9 from the load power management apparatus 10, and receives the unit state data S6 and the power converter management data S7 from the storage battery power management apparatus 12. Then, the total power monitoring apparatus 14 extracts data required for charge and discharge control from these kinds of information. The total power monitoring apparatus 14 outputs, as a system management signal S8, the extracted information to the system controller 20. The transmission of the system management signal S8 is performed in a cycle of once per second.

As shown in FIG. 1, the power supply management system 102 is configured by including the system controller 20, the master controller 22, the sub-controller 24, the power converter management section 26, and the power converter 28. The power supply management system 102 is configured as a hierarchical control system, and the control is configured in a hierarchical manner from top to bottom, that is, in the order of the system controller 20, the master controller 22, the sub-controller 24, and the power converter management section 26.

The system controller 20 has a function of integrally performing power management of the power supply system 100. The master controller 22 is a control apparatus which receives the total charge and discharge control command S1 from the system controller 20, to integrally perform charge and discharge control of the whole storage battery assembly 104. The power converter management section 26 controls the processing of power conversion, voltage conversion, and the like, in each of the power converters 28 included in the power supply system 100. The sub-controller 24 is provided in each of the battery units 40 included in the storage battery assembly 104, so as to perform the charge and discharge control in each of the battery units 40. In the following, these components will be described.

The system controller 20 receives the system management signal S8 including the load side information data S9 and the storage battery information signal unit state data S6 from the power management apparatus 110a. Then, on the basis of these kinds of information, the system controller 20 generates and outputs the total charge and discharge control command S1, which is a charge and discharge control command for the whole power supply system 100.

Specifically, in consideration of the states of the battery units 40 and the power converters 28, the system controller 20 determines the charged/discharged state satisfying the amount of power required by the whole load 110, from the charge and discharge capacity of the storage battery assembly 104, and transmits, as the total charge and discharge control command S1, the determined charged/discharged state to the master controller 22. Further, preferably, in consideration of the charged/discharged state of the battery unit 40 connected to the power converter 28 in which a fault exists, and also in consideration of the information about the charged/discharged state of the battery unit 40 in which a fault exists, the system controller 20 determines the charged/discharged state satisfying the amount of power required by the whole load 110, from the charged/discharged state of the storage battery assembly 104, and transmits, as the total charge and discharge control command S1, the determined charged/discharged state to the master controller 22.

In the total charge and discharge control command S1, the charge and discharge condition is represented by a power amount and time, for example, in such a manner as "charging is to be performed at XX kW for YY seconds". In addition, when the charge upper limit voltage is specified, the charge and discharge condition may be represented such as "charging is to be performed at XX kW until the voltage reaches ZZ V", or when the discharge lower limit voltage is specified, the charge and discharge condition may be represented such as "discharging is to be performed until the voltage reaches ZZ V", or the charging and discharging may be commanded by specifying the SOC. Here, within the practical use range of power, the SOC (charging degree) is set to 100 in the maximum storage state and set to zero in the minimum storage state, and hence the SOC (charging degree) represents, as a percentage, a charging degree in each power storage state on the basis of this range.

Further, when the voltage of the storage battery assembly 104 reaches the discharge lower limit voltage at the time of discharging operation, or when the voltage of the storage battery assembly 104 reaches the charge upper limit voltage at the time of a charging operation, the total charge/discharge control command S1 is set to have such content that "the charging or discharging operation is to be temporarily interrupted (or is to be performed at 0 kW)".

The total charge and discharge control command S1 is transmitted irregularly as required. Therefore, there may be a case where the total charge/discharge control command S1 is not transmitted for a significantly long time. In such a case, the master controller 22, which receives the total charge/discharge control command S1, may be unable to determine whether the system controller 20 is active in the operating state, or is inactive in the non-operating state. To cope with this, a check signal S2 for checking whether or not the system controller 20 is in the operating state is transmitted from the master controller 22 to the system controller 20 at a suitable period. The system controller 20 answers with a response signal when in the operating state. When the response signal is returned from the system controller 20, the master controller 22 can determine that the system controller 20 is in the operating state, and when no response signal is returned from the system controller 20, the master controller 22 can determine that the system controller 20 is in the non-operating state. The suitable period may be set to, for example, 10 minutes.

The master controller 22 is a control apparatus having functions of receiving the total charge and discharge control command S1 from the system controller 20, and transmitting, to the power converter management section 26, an assembly charge and discharge control command S5 for each of the power converters 28.

The master controller 22 receives power converter management data S4 as state data of the power converter 28 from the power converter management section 26, and receives the unit state data S3 representing the state of each of the battery units 40 from the sub-controller 24 provided in each of the battery units 40 included in the storage battery assembly 104. On the basis of the received unit state data S3, the master controller 22 transmits, to the power converter management section 26, an assembly charge and discharge control command S5 including one of a start instruction command for commanding the start of each of the power converters 28, a standby instruction command for commanding a temporary interruption of each of the power converters 28, and a stop instruction command for commanding stopping of each of the power converters 28. Further the assembly charge and discharge control command S5 includes, as required, a target charge/discharge power used for controlling the charging and discharging operation of each of the power converters 28. Further, on the basis of the power converter management data S4 and the unit state data S3, the master controller 22 determines whether or not the total charge and discharge control command S1 transmitted from the system controller 20 can be executed. Then, on the basis of the determination result, the master controller 22 transmits the assembly charge and discharge control command S5 to the power converter management section 26. This determination can be performed, for example, by applying the unit state data S3, and the like, to a conditional expression defined beforehand. When the total charge and discharge control command S1 cannot be performed due to limitation in the capability of the power converter, limitation for safety, and the like, the master controller 22 transmits the assembly charge and discharge control command S5 to the power converter management section after suppressing the charge and discharge amount to an amount on the basis of which the charging and discharging operation can be performed. Alternatively, the master controller 22 may perform control not to transmit the assembly charge and discharge control command S5. Further, when the total charge and discharge control command S1 cannot be performed as it is, the master controller 22 may transmit the result to the storage battery power management apparatus 12.

The transmission and reception of the assembly charge and discharge control command S5 are performed in a period of 100 ms, and the transmission and reception of the power converter management data S4 and the unit state data S3 are performed in a period of, for example, one second. The specific charge and discharge management processing of the master controller 22 will be described below.

Further, the master controller 22 transmits, as the power converter management data S7, the data having the same contents as the contents of the power converter management data S4 received from the power converter management section 26 to the storage battery power management apparatus 12. The master controller 22 performs mainly the monitoring and control of charging and discharging operation in a short period (for example, about one second), and hence the storage battery power management apparatus 12, and the total power monitoring apparatus 14, may perform management and monitoring in a longer period. Therefore, in order to reduce the processing load or the communication load of the storage battery power management apparatus 12 and of the total power monitoring apparatus 14, the power converter management data S7 may be transmitted in a period longer than the transmission period of the power converter management data S4. For example, when the power converter management data S4 is transmitted every second, the power converter management data S7 may be transmitted every ten seconds.

In this case, the information of the power converter management data S4 corresponding to ten transmissions is included in the power converter management data S7. Naturally, the power converter management data S7 may be transmitted in a period other than this period, and the transmission periods of the power converter management data S4 and the power converter management data S7 may also be set to the same period. In the present embodiment, the power converter management data S7 is indirectly transmitted from the power converter management section 26 to the power management apparatus 110a including the storage battery power management apparatus 12 via the master controller 22, but may also be directly transmitted from the power converter management section 26 to the power management apparatus 110a including the storage battery power management apparatus 12.

The sub-controller 24 is provided in each of the battery units 40, and controls opening and closing of the switches included in the switch circuit 30 provided in each of the battery units 40 according to the state of each of the battery units 40. Note that, as will be described below, it is preferred that when the opening and closing control of the switches included in the switch circuit 30 is made different between the charging operation and the discharging operation, the information representing which of the charging processing or the discharging processing is to be performed be transmitted from the master controller 22 to the sub-controller 24. Thereby, the sub-controller 24 can independently perform opening and closing control of the switches of the switch circuit 30 in an order suitable for each of the charging processing and the discharging processing.

When the power supply (not shown) of the sub-controller 24 is turned on, the sub-controller 24 closes the unit switches SW3 and SW4 of the switch circuit 30 shown in FIG. 4, so as to connect the battery unit 40 to the power converter 28. Note that the unit switches SW3 and SW4 may be closed after the storage battery control unit 42 is connected to the parallel connection line L1 as described below.

Here, the sub-controller 24 determines the state of the battery units 40 on the basis of the current value detected by the storage battery current sensor 52 provided in each of the battery units 40, the voltage value detected by the storage battery voltage sensor 54, and the temperature detected by the temperature sensor 56 provided in each of the battery units 40. When a fault exists in the state of the battery unit 40, the sub-controller 24 opens the unit switches SW3 and SW4 of the switch circuit 30, so as to disconnect the connection between the battery unit 40 and the power converter 28.

Further, the sub-controller 24 determines the states of the storage battery pack 44 and the storage battery control unit 42 on the basis of the current value detected by the storage battery current sensor 52 provided in each of the battery units 40, the voltage value detected by the storage battery voltage sensor 54, the temperature detected by the temperature sensor 56 provided in each of the battery units 40, and the reference voltage detected by a parallel connection line voltage sensor 60 provided at the parallel connection line L1. According to the determination result, the sub-controller 24 performs opening and closing control of the selection switches SW1 (SW1 (1) to SW1 (4)) corresponding to the storage battery control unit 42.

For example, the sub-controller 24 determines whether or not a fault exists in the states of the storage battery pack 44 and the storage battery control unit 42, on the basis of the current value detected by the storage battery current sensor 52 provided in each of the battery units 40, the voltage value detected by the storage battery voltage sensor 54, the temperature detected by the temperature sensor 56 provided in each of the battery units 40, and the reference voltage detected by the parallel connection line voltage sensor 60 provided at the parallel connection line L1. When determining that a fault exists, the sub-controller 24 performs processing to disconnect, from the parallel connection line L1, the storage battery control unit 42 including the storage battery pack 44 in which the fault exists. Specifically, the sub-controller 24 opens the selection switches SW1 (SW1 (1) to SW1 (4)) corresponding to the storage battery control unit 42 including the storage battery pack 44 in which the fault exists. Further, the sub-controller 24 transmits, as unit state data S3 and S6, the information representing the fault in the storage battery pack 44 and the storage battery control unit 42, to the master controller 22 and the storage battery power management apparatus 12.

The occurrence of a fault can be determined by comparing the detected values with predefined conditions, that is, can be determined in cases such as where the current detected by the storage battery current sensor 52 is outside the threshold range calculated from a conditional expression defined beforehand, where the cell voltage detected by the storage battery voltage sensor 54 is outside the threshold range defined beforehand, and where the pack temperature detected by the temperature sensor 56 is outside the threshold range defined beforehand.

Further, at the time of start of charging and discharging of the storage battery assembly 104, the sub-controller 24 performs opening and closing control of the selection switches SW1 (SW1 (1) to SW1 (4)) corresponding to the storage battery control unit 42 on the basis of the voltage value detected by the storage battery voltage sensor 54 for each of the storage battery control units 42. This processing will be described below.

Further, as described above, the sub-controller 24 transmits, as the unit state data S3 and S6, the information representing the fault in the battery unit 40 to the master controller 22 and the storage battery power management apparatus 12.

Here, the unit state data S6 may be transmitted in a period longer than the transmission period of the unit state data S3. The reason why the unit state data S6 is transmitted in a period longer than the transmission period of the unit state data S3, is to reduce the processing load or the communication load of the storage battery power management apparatus 12 and of the total power monitoring apparatus 14. For example, when the unit state data S3 is transmitted every second, the unit state data S6 needs only to be transmitted every ten seconds. In this case, the information of the unit state data S3 corresponding to the ten times of transmission is included in the unit state data S6.

Naturally, the unit state data S6 may be transmitted in a period other than this period, and the transmission period of the unit state data S6 and the transmission period of the unit state data S3 may also be set to the same period. In the present embodiment, the unit state data S6 is directly transmitted from the sub-controller 24 to the power management apparatus 110a including the storage battery power management apparatus 12, but may also be indirectly transmitted from the sub-controller 24 to the power management apparatus 110a including the storage battery power management apparatus 12 via the master controller 22.

The power converter management section 26 receives the assembly charge and discharge control command S5 from the master controller 22, so as to control each of the power converters 28 to be controlled. As shown in FIG. 2, in the power supply system 100 of the present embodiment, the number of the power converters 28 to be controlled by the power converter management section 26 is set to eight. However, the number of the power converters 28 is not limited to this, and may be suitably changed. The management processing of the power converters 28 performed in the power converter management section 26 will be described below.

The power converter 28 has functions, such as a function of performing power conversion between AC power of the system power supply 108 and DC power of the storage battery assembly 104, a function of performing voltage conversion between DC voltage of the solar battery system 106 and DC voltage of the storage battery assembly 104, a function of performing power conversion between DC power of the storage battery assembly 104 and AC power of the load 110, and a function of performing voltage conversion between DC voltage of the storage battery assembly 104 and DC voltage of the load 110. Specifically, the power converter 28 is configured by including a bidirectional DC/ AC conversion circuit, or a bidirectional voltage conversion circuit, as required.

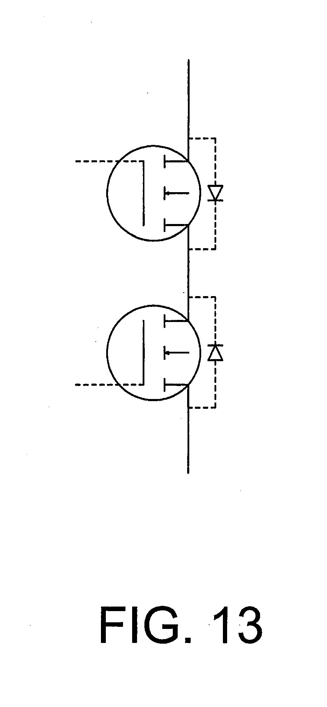

In the above description, each of the selection switch SW1, the switch SW2, the unit switches SW3 and SW4 is illustrated as one FET transistor in FIG. 4, but it is preferred that, as shown in FIG. 13, two FET transistors be connected in series so that parasitic diodes be connected reversely in series. In this case, the opening and closing control is performed so that the two FET transistors connected in series are turned on and off at the same time. In this configuration of the switches, the parasitic diodes can prevent current from unexpectedly flowing in spite of the state where the FET transistors are turned off.

As described above, the system controller 20 determines the charged/discharged state of the whole storage battery assembly 104, which state satisfies the power amount required by the whole load 110, and generates the total charge and discharge control command S1 on the basis of the determined state. Then, in consideration of the power converter 28 and the battery unit 40 in which a fault exists, the master controller 22 generates the assembly charge and discharge control command S5 for specific control of each of the power converters 28 so as to satisfy the charge and discharge control command in the total charge and discharge control command S1. Further, the power converter management section 26 of a lower hierarchical order than the master controller 22 controls each of the power converters 28. At this time, the power converter management section 26 performs processing to disconnect the power converter 28 and the battery unit 40 each connected to the power converter 28, without depending on the direct control by the system controller 20 and the master controller 22, each of which has a higher hierarchical order than the power converter management section 26. Further, the sub-controller 24 controls the connection and disconnection of the storage battery control unit 42 included in each of the battery units 40, without depending on the direct control by the system controller 20 and the master controller 22, each of which has a higher hierarchical order than the sub-controller 24. Even in the case where a fault exists in a part of the power converters 28 and the battery units 40, when the hierarchical control is performed in this way, the system controller 20 can handle the storage battery assembly 104 as if it is one battery. Further, the hierarchical control reduces the processing burden of the control system of a higher hierarchical order, and makes it possible to flexibly cope with a change in the system configuration.

### <Basic operation at the time of charge and discharge>

In the following, the basic processing at the time when a discharging process is performed from the storage battery assembly 104 to the load 110 and at the time when a charging operation is performed from the solar battery system 106 and the system power supply 108 to the storage battery assembly 104 will be described below. First, the discharging operation after discharging is started will be described. Subsequently, the charging operation after charging is started will be described.

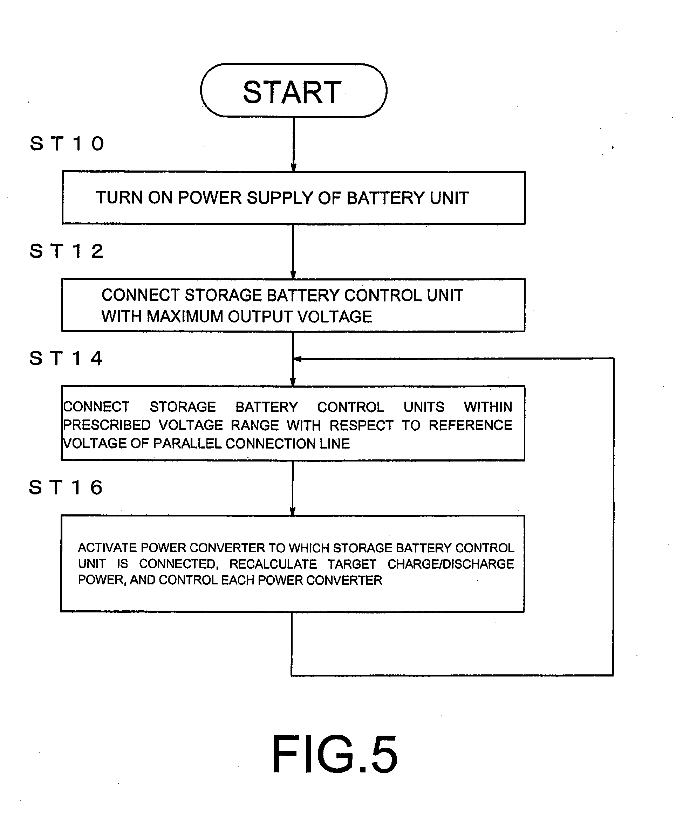

The discharging process is performed according to a flow chart shown in FIG. 5. Before discharging is started, the power supplies of all the battery units 40 included in the power supply system 100 are turned off (i.e., the sub-controller 24 and the switch circuit 30 in the battery unit 40 are in a non-operating state), and the selection switches SW1, the switch SW2 and the unit switches SW3 and SW4 included in each battery unit 40 are opened. In the following discharging process, the switches corresponding to the faulty storage battery pack 44 and storage battery control unit 42 remain closed.

In the following description, the voltage detected by each of the storage battery voltage sensors 54 is described as the output voltage detected for each of the storage battery control units 42. Naturally, it is also possible to use a value obtained by summing the output voltages of the storage battery packs 44 constituting each of the storage battery control units 42, or to use a value obtained by summing the output voltage detected from each parallel connection body of the storage battery cells 46. In the following description, an example is described in which the detected output voltage of each of the storage battery control units 42 is used as it is, but the open circuit output voltage of each of the storage battery control units 42 is preferably used for accurate control of the connection of the battery unit 40. The open circuit output voltage means the output voltage of the storage battery control unit 42 in the case where the influence of the voltage drop or the voltage rise, which is caused by the internal resistance included in the storage battery control unit 42 and by the current flowing through the storage battery control unit 42, is eliminated. The internal resistance included in the storage battery control unit 42 is changed in a predetermined relationship with the temperature, the current value, and the like. Therefore, the voltage drop or the voltage rise caused by the internal resistance can be estimated by the detected values, such as the voltage value of the storage battery control unit 42, which is detected by the storage battery voltage sensor 54, and the current value of the storage battery control unit 42, which is detected by the storage battery current sensor 52, and the temperature detected by the temperature sensor 56. Therefore, the open circuit output voltage can be calculated for each of the storage battery control units 42.

In step ST10, any one of the power supplies of the battery units 40 assigned to each power converter 28 is turned on (that is, the sub-controller 24 and the switch circuit 30 of the battery unit 40 are set in an operating state). The sub-controller 24 of the battery unit 40, whose power supplies are turned on, closes one or both of the unit switches SW3 and SW4 included in the battery unit 40, according to whether the load 110 is a DC load or an AC load, to thereby be connected to the power converter 28. Thus, one battery unit 40 is connected to each power converter 28.

Here, the power supply of the battery unit 40 may be manually turned on by a user. Instead, the power supply of each battery unit 40 may be automatically and sequentially turned on by the master controller 22 or the like according to a prescribed sequence. Preferably, for each battery unit 40 whose power supply has already been turned on, the power supply of another battery unit 40 is sequentially turned on after completion of step ST12 in the following processing.

In step ST12, the storage battery control unit 42 having the highest output voltage is extracted from among the storage battery control units 42 included in the battery unit 40 whose power supply is on, and the opening/closing control signal for closing the selection switch SW1 corresponding to the extracted storage battery control unit 42 is output.

For example, in the configuration shown in FIG. 4, the sub-controller 24 acquires voltage values detected by the storage battery voltage sensors 54(1) to 54(4) provided in the storage battery control units 42(1) to 42(4), and acquires the output voltages of the respective storage battery control units 42(1) to 42(4). If the storage battery control unit 42(1) has the highest output voltage among the storage battery control units 42(1) to 42(4), the sub-controller 24 outputs the opening/closing control signal for turning on the selection switch SW1(1) corresponding to the storage battery control unit 42(1), to the selection switch SW1 (1).
Accordingly, the storage battery control unit 42 (1) having the highest output value among the storage battery control units 42 included in the battery unit 40, whose power supply is on, is connected to the parallel connection line L1, thereby determining the reference voltage of the parallel connection line L1.

In step ST14, the selection switch SW1 corresponding to the storage battery control unit 42 is controlled to be turned on and off, on the basis of the difference between the output voltage of the storage battery control unit 42 included in the battery unit 40 whose power supply is on and the reference voltage of the parallel connection line L1.

If the selection switch SW1(1) corresponding to the storage battery control unit 42(1) is closed in step ST12, the sub-controller 24 determines whether the differences between the output voltages detected by the storage battery voltage sensors 54(2) to 54(4) provided in the respective storage battery control units 42(2) to 42(4) and the reference voltage of the parallel connection line detected by the parallel connection line voltage sensor 60 are within a prescribed connection voltage range or not. The sub-controller 24 outputs the opening/closing control signal for closing only the selection switches SW1(2) to SW1 (4) corresponding to the respective storage battery control units 42(2) to 42(4) whose voltage value differences are within the connection voltage range.

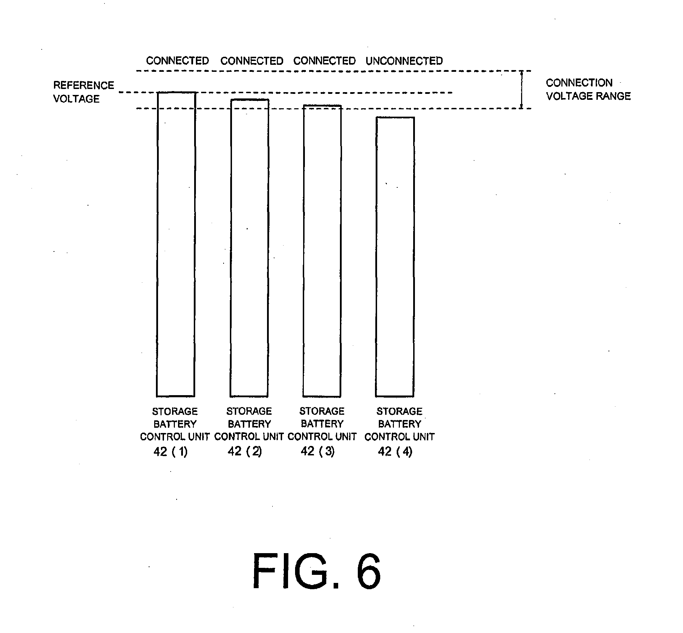

For example, as shown in FIG. 6, if the output voltages of the storage battery control units 42(2) and 42(3) are within the connection voltage range, the sub-controller 24 outputs the opening/closing control signal for turning on the selection switches SW1(2) and SW1(3).

Here, the connection voltage range is set to be within a prescribed voltage range with respect to the reference voltage. Preferably, the connection voltage range is set to a value preventing the storage battery control unit 42 from being largely affected by current that flows when the storage battery control unit 42 is connected to the parallel connection line L1. For example, the connection voltage range may be set to ±5 volts (V).

In the case of dividing the connection voltage range into an upper limit range above the reference voltage and a lower limit range below the reference voltage, it is also preferred that the upper limit range and the lower limit range be set to different voltage widths. Here, more preferably, the upper limit range is set to a larger range than the lower limit range. For example, it is preferred that, in the case of setting the upper limit range to be +3 V with respect to the reference voltage, the lower limit range be set to be -2 V with respect to the reference voltage.

In general, the storage battery is more resistant to excessive charging/discharging in the discharged state where current flows out than in the charged state where current flows in. Accordingly, even if the upper limit range in the connection voltage range is set wider than the lower limit range, the storage battery control units 42 having voltages higher than the reference voltage are connected to the parallel connection line L1, and these storage battery control units 42 only perform discharging. This reduces the possibility of degrading the characteristics of the storage battery control units 42.

The process in step ST14 may also be performed by turning on the power supply of another battery unit 40 whose power supply has not been turned on yet, among the battery units 40 assigned to each power converter 28. At this time, the reference voltage of the parallel connection line L1 is determined by the storage battery control unit 42 connected, to the parallel connection line L1, from the battery unit 40 whose power supply is turned on first. Accordingly, for the battery units 40 whose power supplies are turned on second or later, the selection switches SW1 corresponding to the storage battery control units 42 are sequentially controlled to be turned on and off, on the basis of the difference between the output voltage of each storage battery control unit 42 and the reference voltage of the parallel connection line L1 having already been determined.

The process in step ST14 is performed by the sub-controller 24 provided in each battery unit 40, as required, during discharging from the storage battery assembly 104 to the load 110. That is, discharging is performed from the storage battery control units 42 connected to the parallel connection line L1. As the output voltages of the storage battery control units 42 are reduced, the reference voltage of the parallel connection line L1 is correspondingly reduced. Thus, the selection switch SW1 corresponding to the storage battery control unit 42 newly reaching the connection voltage range is closed, as required. Such a process is also performed in an analogous manner, if a battery unit 40 exists that is connected to the power converter 28 and is other than the battery unit 40 having been connected to the power converter 28 first.

Furthermore, as described above, charging and discharging are performed between the storage battery control units 42 (42(1) to 42(4)) also via the resistors R (R(1) to R(4)) included in the switch circuit 30. This also reduces the difference between the output voltages of the storage battery control units 42 (42(1) to 42(4)). Accordingly, the selection switch SW1 corresponding to the storage battery control unit 42 newly reaching the connection voltage range is closed as required.

The storage battery control unit 42 having an output voltage within the connection voltage range is thus connected to the parallel connection line L1, which can prevent excessive charging or discharging from occurring between the storage battery control units 42. Furthermore, in step ST12, the storage battery control unit 42 having the highest output voltage among the storage battery control units 42 included in the battery unit 40 is connected to the parallel connection line L1 first. This connection allows the storage battery control units 42 to be discharged to the load 110 in an order where the unit with a higher SOC precedes, and discharging from the storage battery control unit 42 having a high output voltage reduces the output voltage, thereby allowing the other storage battery control units 42 to be sequentially connected to the parallel connection line L1.

In step ST16, a process of activating the power converter 28 is performed by the master controller 22. The sub-controller 24 receives a switch state signal representing an actual opened/closed state from the selection switch SW1 under control thereof, and includes the switch state signal into the unit state data S3, and transmits the data to the master controller 22. Upon receiving the unit state data S3 from each sub-controller 24, the master controller 22 generates the assembly charge and discharge control command S5 including the start instruction command for activating the power converter 28 to which at least a prescribed number of storage battery control units 42 are connected among the power converters 28 included in the power supply system 100, on the basis of the switch state signal, and transmits the command to the power converter management section 26. The power converter management section 26 activates the power converter 28 having been instructed to be activated by the start instruction command, and starts power conversion and voltage conversion.

Here, it is preferred that the prescribed number be a number according to which no problem is caused even if discharging via each power converter 28 is started. For example, the prescribed number may be one. In this case, the power converter 28 to which at least one storage battery control unit 42 is connected is activated.

The master controller 22 generates the assembly charge and discharge control command S5 for controlling each power converter 28 on the basis of the total charge and discharge control command S1 from the system controller 20.

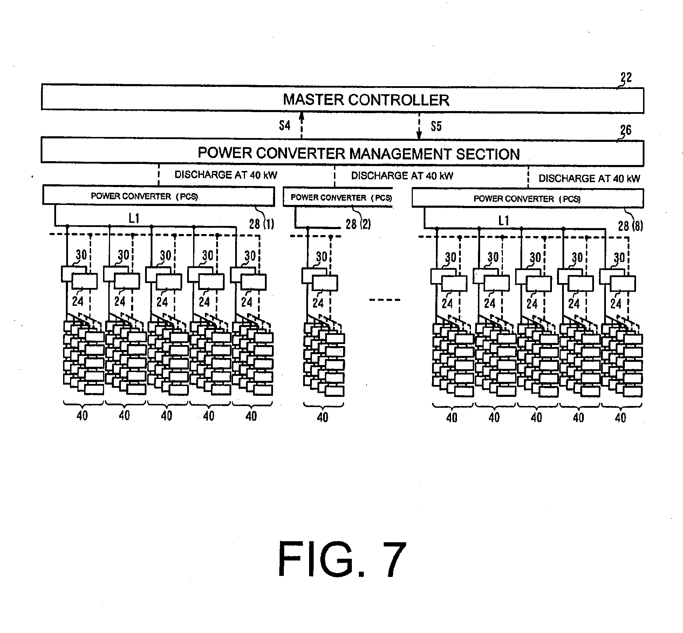

The total charge and discharge control command S1 is an instruction value that represents the charge and discharge amount of the entire storage battery assembly 104 and is to be transmitted to the master controller 22. The assembly charge and discharge control command S5 is a target charge/discharge power that is acquired by dividing the instruction value in the total charge and discharge control command S1 into values for the respective power converters 28. Accordingly, in the case where all the power converters 28 have no fault and are connected with the same number of storage battery control units 42, the assembly charge and discharge control command S5 is a value acquired by dividing the total charge and discharge control command S1 by the number of power converters 28. For example, as shown in FIG. 2, in the case where eight power converters 28 are provided for the power converter management section 26, provided that the total charge and discharge control command S1 has content "discharging at 320 kW for 1800 seconds", the assembly charge and discharge control command S5 is to have content "the first power converter 28(1) is discharged at 40 kW, and the second power converter 28(2) is discharged at 40 kW,..., and the eighth power converter 28(8) is discharged at 40 kW" as described in FIG. 7.

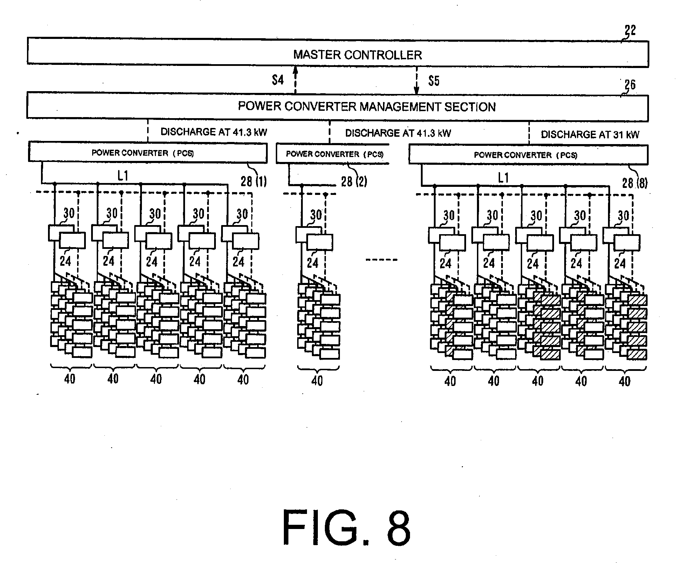

Meanwhile, in the case where the number of storage battery control units 42 actually connected to each power converter 28 is different, the assembly charge and discharge control command S5 in which discharge powers to be assigned to the respective power converters 28 are changed according to the number is generated. For example, as shown in FIG. 8, twenty storage battery control units 42 are actually connected to the first to seventh power converters 28, and fifteen storage battery control units 42 are actually connected to the eighth power converter 28 (in the diagram, the storage battery packs 44 included in the unconnected storage battery control unit 42 are hatched). In this case, if the total charge and discharge control command S1 has the content "discharging at 320 kW for 1800 seconds", the content becomes "the first to seventh power converters 28 discharge at 41.3 kW, and the eighth power converter 28 is discharged at 31 kW" according to the ratio of numbers of storage battery control units 42 connected to the respective power converters 28.

The master controller 22 updates the assembly charge and discharge control command S5, every time when the number of storage battery control units 42 connected to each power converter 28 is changed in step ST14.

When the power converter management data S4 is transmitted to indicate that a fault exists in any of the power converters 28 controlled by the power converter management section 26, the assembly charge and discharge control command S5 having content indicating that part of discharging of the total charge and discharge control command S1 is limited is transmitted to the power converter management section 26. Specifically, the power converter management data S4 contains information indicating a fault in the power converter 28 and the unit state data S3 contains information indicating a fault in the battery unit 40. Accordingly, the master controller 22 generates the assembly charge and discharge control command S5 for controlling each power converter 28, according to the ratio of the numbers of battery units 40 except for those causing a fault to the numbers of battery units 40 connected to the power converters 28, such that the discharged state required by the total charge and discharge control command S1 is satisfied, and outputs the command to the power converter management section 26.

The power converter management section 26 controls power conversion and voltage conversion in each power converter 28 during discharging from the storage battery assembly 104 to the load 110, according to the assembly charge and discharge control command S5. When any of the power converter 28 under control of the power converter management section 26 has a fault, or when the discharging stop instruction command or the standby instruction command is output from the master controller 22, the operation of the faulty power converter 28 is changed into the stop state or the standby state, and information representing the fault in the power converter 28 is transmitted as the power converter management data S4 to the master controller 22.

Such processing can prevent activation of the power converter 28 to which no storage battery control unit 42 is connected. Each power converter 28 can be controlled so as to attain the discharge power according to the number of storage battery control units 42 actually connected to each of the activated power converters 28. Thus, current flowing through the storage battery control units 42 connected to the power converter 28 can be divided in a substantially equal manner.

In the discharging process, in step ST10, the unit switches SW3 and SW4 of a certain battery unit 40 are closed and connected to the power converter 28 first. Instead, the battery unit 40 including the storage battery control unit 42 having the highest output voltage among all the storage battery control units 42 assigned to one power converter 28 may be connected to the power converter 28 first.

In this case, a configuration is adopted that is capable of including, in the unit state data S3, the output voltage values of the storage battery control units 42 included in each battery unit 40, and transmitting the data to the master controller 22 via the sub-controller 24.

The master controller 22 specifies the battery unit 40 including the storage battery control unit 42 having the highest output voltage among all the storage battery control units 42 assigned to each power converter 28, and the power supply of the battery unit 40 is turned on first. The storage battery control unit 42 having the highest output voltage among the storage battery control units 42 is connected to the parallel connection line L1 first. In this case, it is preferred that a configuration be adopted that allow the master controller 22 to perform on and off control of the power supply of the power converter 28 via the power converter management section 26. Processes thereafter are performed analogous to those in steps ST10 to ST16.

Thus, the storage battery control unit 42 having the highest output voltage among all the storage battery control units 42 assigned to each power converter 28 can be connected to the parallel connection line L1 first. Accordingly, on each power converter 28, the storage battery control units 42 can be connected to the load 110 in an order where the unit with a higher SOC precedes, and another storage battery control unit 42 can be sequentially connected to the parallel connection line L1 as the output voltage decreases owing to discharging from the storage battery control unit 42 to the load 110.

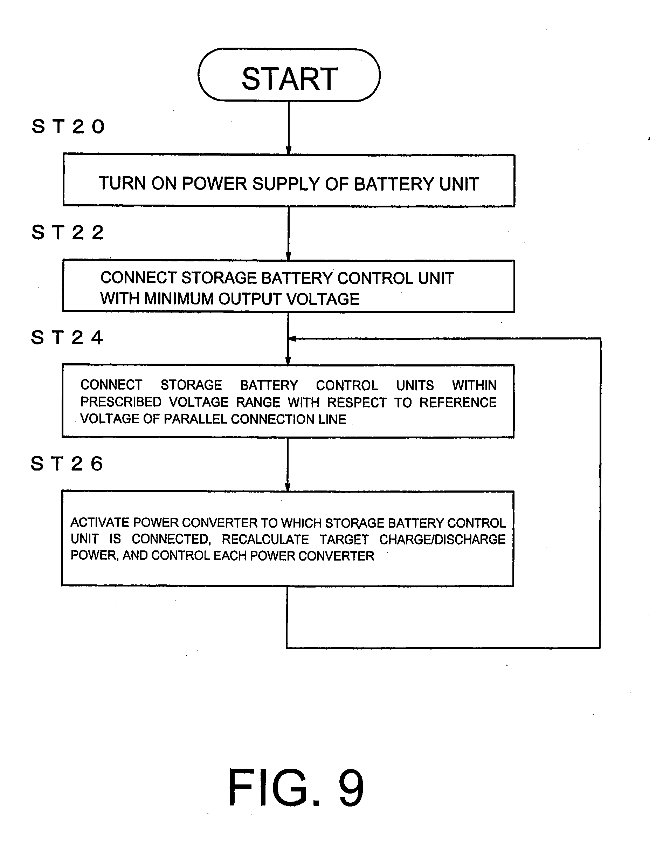

Such control is also applicable to charging. During charging, the processing is performed according to a flow chart shown in FIG. 9. Before charging is started, the power supplies of all the battery units 40 included in the storage battery assembly 104 are turned off, and the selection switches SW1, the switch SW2 and the unit switches SW3 and SW4 included in each battery unit 40 are opened. Also in the following process during charging, the switches corresponding to the faulty storage battery packs 44 and storage battery control units 42 remain closed.

In step ST20, the power supply of any one of the battery units 40 assigned to each power converter 28 is turned on. The sub-controller 24 of the battery unit 40 whose power supply is turned on closes one or both of the unit switches SW3 and SW4 included in the battery unit 40 to be connected to the power converter 28, according to whether the power source is a DC power supply, such as the solar battery system 106, or an AC power supply, such as the system power supply 108. Thus, one battery unit 40 is connected to each power converter 28. This process can be performed in a manner analogous to that in step ST10.

In step ST22, the storage battery control unit 42 having the lowest output voltage is extracted from among the storage battery control units 42 included in the battery unit 40 whose power supply is turned on, and the opening/closing control signal for closing the selection switch SW1 corresponding to the extracted storage battery control unit 42 is output.

For example, in the case of the configuration shown in FIG. 4, the sub-controller 24 acquires the voltage values detected by the storage battery voltage sensors 54(1) to 54(4) provided in the respective storage battery control units 42(1) to 42(4), and acquires the output voltages of the respective storage battery control units 42(1) to 42(4). If the storage battery control unit 42(1) has the lowest output voltage among the storage battery control units 42(1) to 42(4), the sub-controller 24 outputs the opening/closing control signal, for closing the selection switch SW1 (1) corresponding to the storage battery control unit 42(1), to this selection switch SW1 (1). Accordingly, the storage battery control unit 42(1) having the lowest output value among the storage battery control units 42 included in the battery unit 40 whose power supply is turned on is connected to the parallel connection line L1, and the reference voltage of the parallel connection line L1 is determined.

In step ST24, the selection switch SW1 corresponding to the storage battery control unit 42 is controlled to be turned on and off, on the basis of the differences between the output voltages of the storage battery control units 42 included in the battery unit 40 whose power supply is turned on and the reference voltage of the parallel connection line L1.

When the selection switch SW1(1) corresponding to the storage battery control unit 42(1) is closed in step ST22, the sub-controller 24 determines whether the differences between the output voltages detected by the storage battery voltage sensors 54(2) to 54(4) provided in the respective storage battery control units 42(2) to 42(4) and the reference voltage of the parallel connection line L1 detected by the parallel connection line voltage sensor 60 are within a prescribed connection voltage range or not. The sub-controller 24 then outputs the opening/closing control signal for closing only the selection switches SW1 (2) to SW1 (4) corresponding to the storage battery control units 42(2) to 42(4) whose voltage value differences are within the connection voltage range.

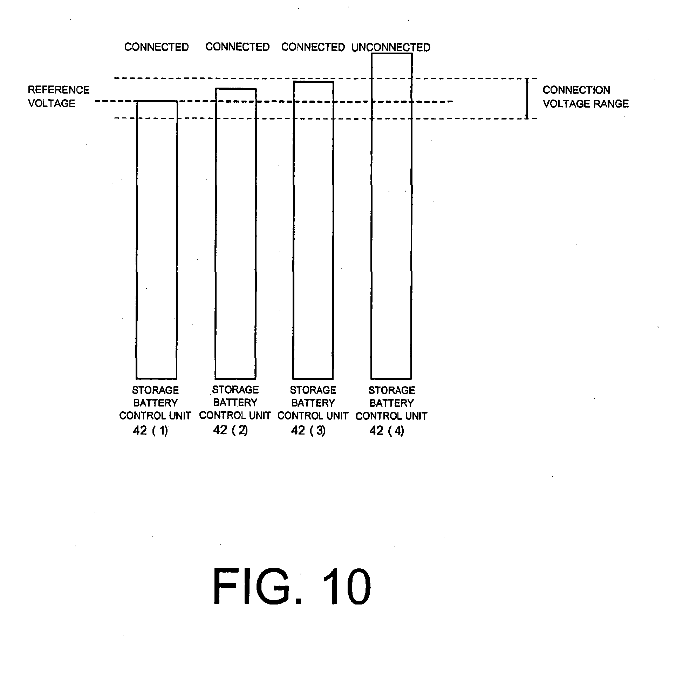

For example, as shown in FIG. 10, when the output voltages of the storage battery control units 42(2) and 42(3) are within the connection voltage range, the sub-controller 24 outputs the opening/closing control signal for closing the selection switches SW1(2) and SW1 (3). Here, the connection voltage range can be set according to a concept analogous to that during discharging.

The process in step ST24 is performed, as necessary, by the sub-controller 24 provided in each battery unit 40 during charging from the power source to the storage battery assembly 104. That is, charging is performed to the storage battery control unit 42 connected to the parallel connection line L1. As the output voltage of the storage battery control unit 42 increases, the reference voltage of the parallel connection line L1 increases accordingly. Accordingly, the selection switch SW1 corresponding to the storage battery control unit 42 newly reaching the connection voltage range is closed, as necessary. Such processing is analogously performed in the case where there is a battery unit 40 that is connected to the power converter 28, other than the battery unit 40 having been connected to the power converter 28 first.

As described above, charging and discharging are also performed between the storage battery control units 42 (42(1) to 42(4)) via the resistors R (R(1) to R(4)) included in the switch circuit 30. This also reduces the difference between the output voltages of the storage battery control units 42 (42(1) to 42(4)). Accordingly, the selection switch SW1 corresponding to the storage battery control unit 42 newly reaching the connection voltage range is set to be closed as required.

The storage battery control unit 42 having an output voltage within the connection voltage range is thus connected to the parallel connection line L1, which can prevent excessive charging or discharging from occurring between the storage battery control units 42. Furthermore, in step ST22, the storage battery control unit 42 having the lowest output voltage among the storage battery control units 42 included in the battery unit 40 is connected to the parallel connection line L1 first. This connection allows the storage battery control units 42 to be charged in an order where the unit with a lower SOC precedes, and charging to the storage battery control unit 42 having a low output voltage increases the output voltage, thereby allowing the other storage battery control units 42 to be sequentially connected to the parallel connection line L1.

In step ST26, a process analogous to step ST16 is performed. That is, upon receiving the unit state data S3 from each sub-controller 24, the master controller 22 generates the assembly charge and discharge control command S5 including the start instruction command for activating the power converter 28 to which at least a prescribed number of storage battery control units 42 are connected among the power converters 28 included in the power supply system 100, on the basis of the switch state signal, and transmits the command to the power converter management section 26. The power converter management section 26 activates the power converter 28 having been instructed to be activated by the start instruction command, and starts power conversion and voltage conversion.

The master controller 22 generates the assembly charge and discharge control command S5 on the basis of the total charge and discharge control command S1. The assembly charge and discharge control command S5 is a target charge/discharge power that is acquired by dividing the instruction value in the total charge and discharge control command S1 into values for the respective power converters 28. In the case where all the power converters 28 have no fault and are connected with the same number of storage battery control units 42, the assembly charge and discharge control command S5 is a value acquired by dividing the total charge and discharge control command S1 by the number of power converters 28. For example, in the case where eight power converters 28 are provided for the power converter management section 26, provided that the total charge and discharge control command S1 has content "discharging at 320 kW for 1800 seconds", the assembly charge and discharge control command S5 is to have content "the first power converter 28(1) is charged at 40 kW, and the second power converter 28(2) is charged at 40 kW,..., the eighth power converter 28(8) is charged at 40 kW".

Meanwhile, in the case where the number of storage battery control units 42 actually connected to each power converter 28 is different, the assembly charge and discharge control command S5 is generated, in which charging and discharge powers to be assigned to each power converter 28 are changed according to the number of battery control units 42. For example, provided that twenty storage battery control units 42 are actually connected to the first to seventh power converters 28, and fifteen storage battery control units 42 are actually connected to the eighth power converter 28, if the total charge and discharge control command S1 has the content "charging at 320 kW for 1800 seconds", the content becomes "the first to seventh power converters 28 are charged at 41.3 kW, and the eighth power converter 28 is charged at 31 kW" according to the ratio of numbers of storage battery control units 42 connected to the respective power converters 28.

The master controller 22 updates the assembly charge and discharge control command S5, every time the number of storage battery control units 42 connected to each power converter 28 is changed in step ST24.

The power converter management data S4 contains information indicating a fault in the power converter 28 and the unit state data S3 contains information indicating a fault in the battery unit 40. Accordingly, the master controller 22 generates the assembly charge and discharge control command S5 for controlling each power converter 28, according to the ratio of the numbers of battery units 40 except for battery units 40 causing a fault to the numbers of battery units 40 connected to the power converters 28, except for the power converters 28 causing a fault, such that the charged state required by the total charge and discharge control command S1 is satisfied, and outputs the command to the power converter management section 26.

The power converter management section 26 controls power conversion and voltage conversion in each power converter 28 during charging from the power source to the storage battery assembly 104, according to the assembly charge and discharge control command S5. When any of the power converters 28 under control of the power converter management section 26 has a fault, or when the charging stop instruction command or the standby instruction command is output from the master controller 22, the operation of the faulty power converter 28 is changed into the stop state or the standby state, and information indicating the fault in the power converter 28 is transmitted as the power converter management data S4 to the master controller 22.

The power converter 28 to which no storage battery control unit 42 is connected can thus be prevented from being activated, also during charging. Each power converter 28 can be controlled so as to attain the charge power according to the number of storage battery control units 42 actually connected to each of the activated power converters 28. Thus, current flowing through the storage battery control units 42 connected to the power converter 28 can be divided in a substantially equal manner.

Note that the battery unit 40 including the storage battery control unit 42 having the lowest output voltage among all the storage battery control units 42 assigned to one power converter 28 may be connected to the power converter 28 first, also during charging.

In this case, a configuration is adopted that is capable of including, in the unit state data S3, the output voltage values of the storage battery control units 42 included in each battery unit 40, and transmitting the data to the master controller 22 via the sub-controller 24. The master controller 22 specifies the battery unit 40 including the storage battery control unit 42 having the lowest output voltage among all the storage battery control units 42 assigned to each power converter 28, and the power supply of the battery unit 40 is turned on first. The storage battery control unit 42 having the lowest output voltage among the storage battery control units 42 is connected to the parallel connection line L1 first. In this case, it is preferred that a configuration be adopted that allows the master controller 22 to perform on and off control of the power supply of the power converter 28 via the power converter management section 26. Processes thereafter are performed analogous to those in steps ST20 to ST26.

Thus, the storage battery control unit 42 having the lowest output voltage among all the storage battery control units 42 assigned to each power converter 28 can be connected to the parallel connection line L1 first. Accordingly, the storage battery control units 42 can be sequentially charged starting from the unit with a lower SOC, and another storage battery control unit 42 can be sequentially connected to the parallel connection line L1 as the output voltage increases owing to charging from the power source to the storage battery control unit 42.

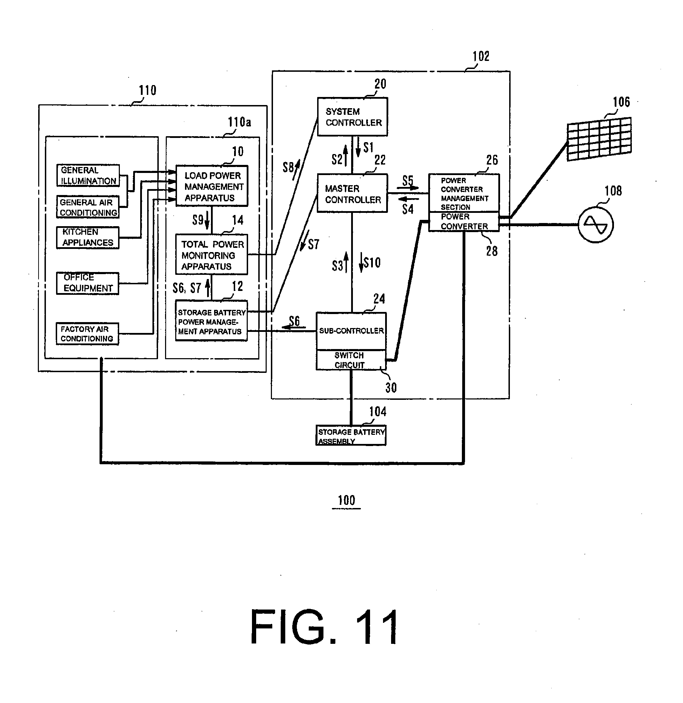

As to the discharging process and the charging process, a configuration may be adopted that causes the master controller 22 to directly perform control of the switches included in the switch circuit 30. This control is performed by the sub-controller 24 in the above description. In this case, as shown in FIG. 11, the master controller 22 is allowed to transmit the switch control signal S10 to the sub-controller 24. The master controller 22 performs the control of the switch circuit 30, substituting for the sub-controller 24, which performs the control in the above description.

According to such a configuration, the master controller 22 can directly control the opened/closed states of the respective switches included in the switch circuit 30, directly capture, as switch state data, actual opened/closed states of the switches subjected to the on/off control, and generate an assembly charge and discharge control command S5 for each power converter 28 on the basis of the switch state data.

The above description has been given on the example of performing any one of the charging and discharging processes. However, the storage battery assembly 104 can be charged while being discharged to the load 110. In this case, when the power required for the load 110 is higher than the power supplied by the power source, it is preferred that the storage battery control unit 42 be connected to the parallel connection line L1 according to performance of steps ST10 to ST16, which are the discharging process described above, while the storage battery assembly 104 be charged by the power source. This is because the power can be supplied from the storage battery assembly 104 to the load 110 while charging from the power source to the storage battery assembly 104 can hinder reduction in charged amount stored in the storage battery assembly 104. Meanwhile, when the power required for the load 110 is lower than the power supplied by the power source, it is preferred that the storage battery control unit 42 be connected to the parallel connection line L1 according to performance of steps ST20 to ST26, which are the charging process described above, while the storage battery assembly 104 is discharged to the load 110. This is because the power can be supplied from the storage battery assembly 104 to the load 110 while charging from the power source to the storage battery assembly 104 can increase the charged amount stored in the storage battery assembly 104.

### <Standby process>

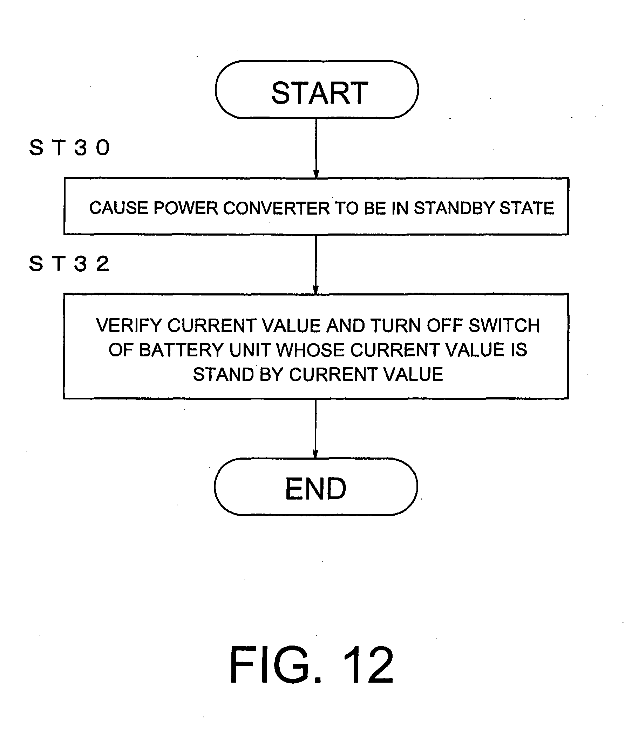

As described above, when discharging is started or charging is started, connection of the storage battery control unit 42 is verified and then the process of activating the power converter 28 is performed. In contrast, when the power converter 28 is caused to be in the standby state to stop power conversion and voltage conversion, a reverse process is performed. The standby process is performed according to a flowchart of FIG. 12.

In step ST30, a process of causing the power converter 28 to come into the standby state is performed. If the master controller 22 determines to stop the charging process or the discharging process on the storage battery assembly 104 on the basis of the total charge and discharge control command S1 from the system controller 20, this controller outputs the assembly charge and discharge control command S5 including the standby instruction command instructing standby of each power converter 28, to the power converter management section 26.

For example, when the total charge and discharge control command S1 has content indicating lack of necessity for charging and discharging, such as "causing the charging or the discharging to be in the standby state", the master controller 22 outputs, to the power converter management section 26, the assembly charge and discharge control command S5 including a standby instruction command for each power converter 28.

Upon receiving the assembly charge and discharge control command S5 including the standby instruction command, the power converter management section 26 causes the power converter 28 under control thereof to come into the standby state to stop power conversion and voltage conversion.

In step ST32, it is determined whether the power converter 28 is in the standby state or not, and a process of separating each battery unit 40 from the power converter 28 is performed according to the result.

The sub-controller 24 included in each battery unit 40 reads a current value detected by the storage battery current sensor 52 provided in each battery unit 40, and transmits the unit state data S3 including the detected current value to the master controller 22.

Upon receiving the unit state data S3, the master controller 22 causes the power converter 28 to come into the standby state, and subsequently outputs the switch control signal S10 for closing the switch to the battery unit 40 if a condition where the total sum of current values of the storage battery control units 42 is a standby current value is satisfied. The total sum of the current values is thus adopted as the condition, because, even if the charging current from the power source to the battery unit 40 or the discharging current from the battery unit 40 to the load 110 is zero, charging and discharging currents alternately flow between the storage battery control units 42 (42(1) to 42(4)) included in the identical battery unit 40 via the resistors R (R(1) to R(4)). The standby current value is a value of current flowing between the power converter 28 and the battery unit 40 when the power converter 28 is in the standby state, and is zero in the ideal case.

In this case, as shown in FIG. 11, preferably, a configuration is adopted that allows the master controller 22 to instruct the sub-controller 24 of each storage battery control unit 42 to perform on and off control of the switches included in the switch circuit 30. Upon receiving the switch control signal S10 for closing the switches, the sub-controller 24 closes the selection switches SW1, the switch SW2 and the unit switches SW3 and SW4 included in the switch circuit 30, and disconnected each storage battery control unit 42 from the parallel connection line L1.

As described above, in the case of causing the power converter 28 to be in the standby state, an instruction of causing the power converter 28 to come into the standby state is issued, it is subsequently verified that the current flowing between the power converter 28 and each battery unit 40 actually reaches the standby current value, and then the switches included in the battery unit 40 are opened. Thus, the switches, which are included in the switch circuit 30 of the battery unit 40 of which the current is maintained in a state of flowing due to the power converter 28 is not caused to be in the standby state for any reason, are forcedly turned off. This can prevent a large current, such as a transient current, from flowing in the switch circuit 30. Accordingly, deterioration and failure of the switch circuit 30 can be suppressed.

### REFERENCE NUMERALS LIST

- 10: Load power management apparatus
- 12: Storage battery power management apparatus
- 14: Total power monitoring apparatus
- 20: System controller
- 22: Master controller
- 24: Sub-controller
- 26: Power converter management section
- 28: Power converter
- 30: Switch circuit
- 40: Battery unit
- 42: Storage battery control unit
- 44: Storage battery pack
- 46: Storage battery cell
- 52: Storage battery current sensor
- 54: Storage battery voltage sensor
- 56: Temperature sensor
- 60: Parallel connection line voltage sensor
- 100: Power supply system
- 102: Power supply management system
- 104: Storage battery assembly
- 106: Solar battery system
- 108: System power supply
- 110: Load
- 110a: power management apparatus

## Claims

1. A power supply system, comprising:
a battery unit including a plurality of storage battery control units which each include at least one storage battery cell and are connected to a parallel connection line via selection switches;
a power converter which includes a DC/AC conversion circuit or a voltage conversion circuit between a power source or a load and the battery unit, and is connected to the parallel connection line; and
a master controller controlling the power converter, wherein, the master controller receives a switch state signal indicating that the selection switch is actually closed, causes the power converter to operate after at least a prescribed standard number of selection switches are closed, calculates a target charge/discharge power according to the number of storage battery control units connected to the power converter on the basis of the switch state signal, and controls the power converter such that the target charge/discharge power is reached.

2. The power supply system according to claim 1,
wherein the master controller outputs a switch control signal for controlling opening and closing of the selection switch.

3. The power supply system according to claim 1 or 2, wherein the battery unit includes a sub-controller directly controlling opening and closing of the selection switch.

4. The power supply system according to any one of claims 1 to 3,
wherein, charging to the battery unit and discharging from the battery unit are switched, all the selection switches are temporarily opened.

5. The power supply system according to any one of claims 1 to 4,
wherein, when power is supplied from the storage battery control unit to the load connected to the parallel connection line, or the storage battery control unit is charged via the parallel connection line,
the storage battery control units which are unconnected and have output voltages within a prescribed voltage range are sequentially connected to the parallel connection line, the range being with respect to a reference voltage determined by the storage battery control unit having already been connected to the parallel connection line.

6. The power supply system according to any one of claims 1 to 5,
wherein, when power is supplied from the storage battery control unit to the load connected to the parallel connection line, the storage battery control units are sequentially connected to the parallel connection line in order from the storage battery control unit having a higher output voltage to the storage battery control unit having a lower output voltage.

7. The power supply system according to claim 6,
wherein the storage battery control unit having the highest output voltage among the storage battery control units is connected to the parallel connection line first.

8. The power supply system according to any one of claims 1 to 5,
wherein, when the storage battery control unit is charged via the parallel connection line, the storage battery control units are sequentially connected to the parallel connection line in order from the storage battery control unit having a lower output voltage to the storage battery control unit having a higher output voltage.

9. The power supply system according to claim 8,
wherein the storage battery control unit having the lowest output voltage among the storage battery control units is connected to the parallel connection line first.

10. The power supply system according to claim 1, further comprising
a system controller which acquires load side information data indicating a required power situation of the load, and generates a total charge and discharge control command indicating charge and discharge power required for the entire system on the basis of the load side information data,
wherein the master controller receives the total charge and discharge control command from the system controller, and calculates the target charge/discharge power of the power converter on the basis of the total charge and discharge control command.
